# EUROPÄISCHE PATENTSCHRIFT

(11) **EP 3 564 568 B1**
(45) Veröffentlichungstag und Bekanntmachung des Hinweises auf die Patenterteilung: **25.03.2020**
(21) Anmeldenummer: 18170463.6
(22) Anmeldetag: 02.05.2018
(51) Int. Cl.: F16L 37/23

(54) **SCHNELLKUPPLUNG**
QUICK CONNECTOR
RACCORD RAPIDE

(43) Veröffentlichungstag der Anmeldung: 06.11.2019
(73) Patentinhaber: Wenz Kunststoff GmbH & Co. KG, 58511 Lüdenscheid (DE)
(72) Erfinder: Weller, Karsten, 58509 Lüdenscheid (DE)
(74) Vertreter: Patentanwälte Dörner & Kötter PartG mbB

(56) Entgegenhaltungen:
- WO-A1-2016/079563
- DE-A1- 2 617 620
- DE-T2- 69 114 715
- FR-A1- 2 827 647
- US-A1- 2002 024 217

## Beschreibung

Die Erfindung betrifft eine Schnellkupplung für Fluidleitungen, umfassend eine Kupplungsmuffe zur Aufnahme eines Kupplungsteckers und eine Verriegelungsvorrichtung, die eine auf der Kupplungsmuffe axial verschiebbare Verschlusshülse sowie wenigstens eine in einer Bohrung der Kupplungsmuffe radial bewegbare Verriegelungskugel aufweist, welche wenigstens eine Verriegelungskugel über die Verschlusshülse nach radial innen bewegbar und arretierbar ist.

Schnellkupplungen der vorgenannten Art sind in unterschiedlichsten Ausführungen bekannt und beispielsweise in der DE 26 17 620 A1 beschrieben. Derartige Schnellkupplungen dienen der Aufnahme eines Kupplungssteckers, der für den Eingriff der Verriegelungskugeln Vertiefungen oder eine Ringnut aufweist. Durch Verschieben der Verschlusshülse können die Verriegelungskugeln in die Nut der Vertiefungen des Kupplungssteckers hineinbewegt und dort radial arretiert werden, wodurch der Kupplungsstecker in der Kupplungsmuffe axial fixiert ist.

Schnellkupplungen der vorgenannten Art werden insbesondere auch zum Anschluss von Kühlleitungen von Temperiersystemen für Spritzgießanlagen eingesetzt. Hierbei kann das durch die Schnellkupplung fließende Kühlmedium Temperaturen von 70 °C und mehr erreichen. Wird eine Schnellkupplung eines solchen Systems gelöst, bevor die Kühlflüssigkeit hinreichend abgekühlt ist, kann es zu Brühverletzungen des Bedienpersonals kommen.

Hier will die Erfindung Abhilfe schaffen. Der Erfindung liegt die Aufgabe zugrunde, eine Schnellkupplung der vorbekannten Art bereitzustellen, bei der ein Verbrühen des Bedienpersonals durch Lösen der Schnellkupplung bei noch heißem Kühlmedium verhindert ist. Gemäß der Erfindung wird diese Aufgabe durch eine Schnellkupplung mit den Merkmalen des kennzeichnenden Teils des Patentanspruchs 1 gelöst.

Mit der Erfindung ist eine Schnellkupplung bereitgestellt, bei der eine Verbrühung des Bedienpersonals bei Lösen der Schnellkupplung bei noch heißem Kühlmedium verhindert ist. Dadurch, dass an der Kupplungsmuffe oder an der Verschlusshülse ein temperaturgesteuertes Sperrmittel angeordnet ist, dass bei Überschreiten einer Grenztemperatur in einen an der Verschlusshülse oder der Kupplungsmuffe angeordneten Hinterschnitt eingreift, ist bei heißem Temperiermedium die Verschlusshülse gesperrt, so dass diese axial nicht verschiebbar ist. Ein Lösen der Schnellkupplung bei noch heißem Temperiermedium ist somit nicht möglich.

Unter einem temperaturgesteuerten Sperrmittel ist vorliegend jedes Bauteil bzw. jede Bauteilanordnung zu verstehen, die aufgrund einer Temperaturänderung ihre geometrische Form ändert.

In Weiterbildung der Erfindung umfasst das Sperrelement wenigstens ein Dehnstoffelement und/oder ein Bimetallteil, das sich bei Wärmeeinwirkung in Richtung des Hinterschnitts verformt. Hierdurch ist eine zuverlässige, temperaturabhängige Sperrung der Verschlusshülse ermöglicht.

In Ausgestaltung der Erfindung ist das wenigstens eine Bimetallteil als Bimetallstreifen ausgebildet. Solche Bimetallstreifen bestehen aus zwei endseitig miteinander verbundenen Metallstreifen mit unterschiedlichem Temperaturausdehnungskoeffizient, wodurch bei Wärmeeinwirkung ein Verbiegen des Bimetallstreifens in eine definierte Richtung erzielt ist.

In weiterer Ausgestaltung der Erfindung sind mehrere Bimetallstreifen radial um das Kupplungselement angeordnet, wobei der Hinterschnitt durch eine radial umlaufende Nut gebildet ist. Hierdurch ist eine umlaufende gleichmäßige Sperrung der Verschlusshülse bei Überschreiten einer Grenztemperatur erzielt.

In weiterer Ausgestaltung der Erfindung weist die umlaufende Nut einen sägezahnförmigen Querschnitt auf. Hierdurch ist eine vollständig in der Kupplungsmuffe bzw. in der Verschlusshülse versenkbare Positionierung der Bimetallstreifen ermöglicht, wodurch eine unerwünschte Behinderung der Verschlusshülse bei kühlem Temperiermedium vermieden ist.

In Weiterbildung der Erfindung umfasst das Sperrelement radial angeordnete Metallstreifen, die mit einem Dehnstoffelement verbunden sind, über das diese bei Überschreitung einer Grenztemperatur in den Hinterschnitt hineinbewegbar sind. Dabei ist das Dehnstoffelement bevorzugt ringförmig innerhalb einer Nut angeordnet, wodurch die Ausdehnrichtung definiert ist. Anstelle von Metallstreifen können beispielsweise auch Kunststoffstreifen angeordnet sein, die vorzugsweise an einem Ende über einen umlaufenden Ring miteinander verbunden sind.

Erfindungswesentlich ist die Anordnung eines sich in Abhängigkeit von der Temperatur in seiner geometrischen Ausgestaltung ändernden Bauteils, welches bei Überschreiten einer Grenztemperatur eine sperrende Festlegung der Verschlusshülse bewirkt, so dass diese nicht mehr axial auf der Kupplungsmuffe verschiebbar ist.

Andere Weiterbildungen und Ausgestaltungen der Erfindung sind in den übrigen Ansprüchen angegeben. Ein Ausführungsbeispiel der Erfindung ist in den Zeitungen dargestellt wird nachfolgend im Einzelnen beschrieben. Es zeigen
- Figur 1: die schematische Darstellung einer Schnellkupplung und
- Figur 2: die Detaildarstellung eines Sperrelements der Schnellkupplung aus Figur 1 mit festgelegter Verschlusshülse

Die als Ausführungsbeispiel gewählte Schnellkupplung umfasst in bekannter Art und Weise eine Kupplungsmuffe 1, die mit Bohrungen 11 versehen ist, welche Verriegelungskugeln 12 aufnehmen. Die Bohrungen 11 sind nach radial innen konisch zulaufend ausgeführt, so dass ein vollständiger Durchtritt der Verriegelungskugeln 12 verhindert ist. Innen ist in der Kupplungsmuffe 1 eine Anschlusshülse 2 axial verschiebbar angeordnet, die über eine Feder 21 in Richtung der Verriegelungskugeln 12 vorgespannt an einem innen umlaufenden Absatz 13 anliegt. In dieser Position ist die radiale Bewegung der Verriegelungskugeln 12 durch die Anschlusshülse 2 verhindert. Weiterhin weist die Kupplungsmuffe 1 an ihrem den Bohrungen 11 entgegengesetzten Ende ein Außengewinde 14 zum Anschluss einer Leitung auf. Auf der Kupplungsmuffe 1 ist weiterhin in bekannter Art und Weise eine Verschlusshülse 3 axial verschiebbar angeordnet. Die Verschlusshülse 3 ist über eine Feder 31 in Richtung der Bohrungen 11 vorgespannt. Endseitig ist in der Verschlusshülse 3 innen umlaufend eine Nut 32 zum Hineingleiten der Verriegelungskugeln 12 bei entgegen der Vorspannung der Feder 31 in Entriegelungsrichtung positionierter Verschlusshülse 3.

Zum Anschluss eines - nicht dargestellten - Kupplungssteckers einer mit der Schnellkupplung zu verbindenden Leitung wird der Kupplungsstecker in die Kupplungsmuffe 1 eingeschoben, wobei die Anschlusshülse 2 entgegen der Vorspannkraft der Feder 21 in Richtung des Außengewindes 14 nach hinten geschoben wird. Hierdurch wird der Weg für die Verriegelungskugeln 12 freigemacht, die über die an diesen anliegende, über die Feder 31 vorgespannte Verschlusshülse 3 in eine hierfür in dem Kupplungsstecker angeordnete umlaufende Nut hineinbewegt werden. Der Kupplungsstecker ist so in der Kupplungsmuffe axial fixiert. Zum Lösen der Verbindung wird die Verschlusshülse 3 entgegen der Vorspannung der Feder 31 in Richtung des Außengewindes 14 bewegt, wodurch die Verriegelungskugeln 12 in die umlaufende Nut 32 der Verschlusshülse 3 hineingleiten können. In dieser Position kann der Kupplungsstecker aus der Kupplungsmuffe 1 hinausgezogen werden, wobei zugleich durch die Vorspannung der Feder 21 die Anschlusshülse 2 in ihre Ursprungsstellung zurückbewegt wird.

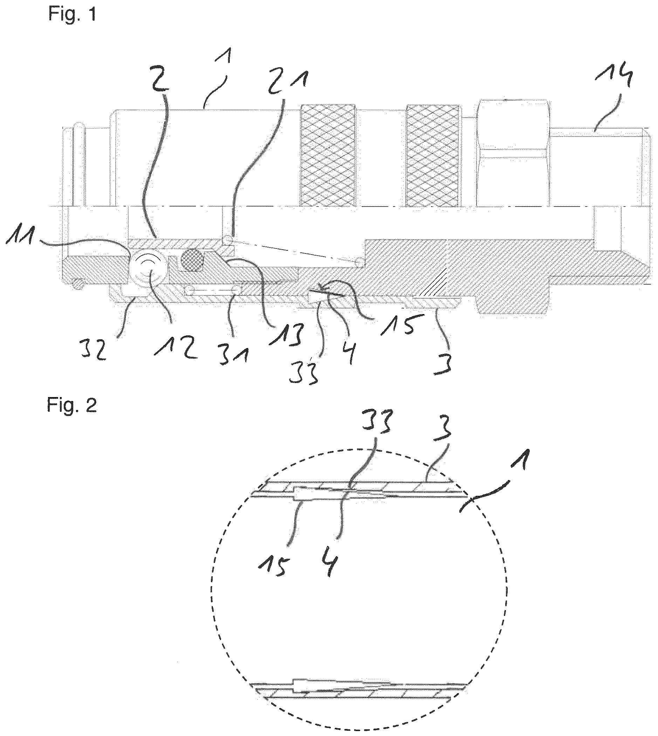

In die Kupplungsmuffe 1 ist weiterhin außen umlaufend eine Nut 15 mit sägezahnförmigem Querschnitt eingebracht, die in Verschlussstellung der Verschlusshülse 3 mit einer in der Verschlusshülse 3 innen eingebrachten umlaufenden Nut 33 fluchtet. (In Figur 1 ist - lediglich zum besseren Verständnis - eine fluchtende Positionierung der Nuten 15, 33 dargestellt, obwohl die Verschlusshülse 3 sich nicht in Verriegelungsposition befindet. In der dargestellten Position der Verschlusshülse 3 sind die Nuten 15, 33 tatsächlich versetzt zueinander angeordnet. Die Nut 33 weist ebenfalls einen sägezahnförmigen Querschnitt auf, so dass durch die beiden Nuten 15, 33 von Kupplungsmuffe 1 und Verschlusshülse 3 in Verschlussstellung der Verschlusshülse 3 ein umlaufender Kanal gebildet ist, dessen Querschnitt im Wesentlichen einem gleichschenkligen Dreieck entspricht. In der Nut 15 der Kupplungsmuffe 1 ist an ihrer dem Außengewinde 14 zugewandten Seite ein ansonsten frei beweglicher Bimetallstreifen 4 befestigt, der bei einer Temperatur unterhalb der Grenztemperatur, die im Ausführungsbeispiel 50 °C beträgt, vollständig von der Nut 15 aufgenommen ist. Dabei ist der Bimetallstreifen 4 derart ausgebildet, dass er sich bei Anliegen einer Grenztemperatur, die im Ausführungsbeispiel 50 °C beträgt, derart krümmt, dass er in den durch die Nut 33 der Verschlusshülse 3 gebildeten Hinterschnitt eingreift und an deren der Verriegelungskugeln 12 zugewandten Kante anliegt wodurch die Verschlusshülse 3 festgelegt ist. Ein Verschieben der Verschlusshülse 3 entlang der Kupplungsmuffe 1 ist in dieser Position der Bimetallstreifen 4 verhindert. Diese Sperrstellung der Bimetallstreifen 4 ist schematisch in Figur 2 dargestellt.

In einer weiteren - nicht dargestellten - Ausführungsform ist in der Nut 15 der Kupplungsmuffe 1 eine Aufnahmenut für ein ringförmig ausgebildetes Dehnstoffelement angeordnet, das an den Streifen anliegt. In dieser Ausführungsform erfolgt die Biegung des Streifens 4 über die Ausdehnung des Dehnstoffelements. Der Streifen selbst muss in dieser Ausführungsform nicht als Bimetallstreifen ausgebildet sein.

## Patentansprüche

1. Schnellkupplung für Fluidleitungen, umfassend eine Kupplungsmuffe zur Aufnahme eines Kupplungssteckers und einer Verriegelungsvorrichtung, die eine auf der Kupplungsmuffe axial verschiebbare Verschlusshülse sowie wenigstens eine in einer Bohrung der Kupplungsmuffe radial bewegbare Verriegelungskugel aufweist, welche wenigstens eine Verriegelungskugel über die Verschlusshülse radial bewegbar und arretierbar ist, **dadurch gekennzeichnet, dass** an der Kupplungsmuffe (1) oder an der Verschlusshülse (3) ein temperaturgesteuertes Sperrmittel angeordnet ist, das bei Überschreiten einer Grenztemperatur in einen an der Verschlusshülse (3) oder an der Kupplungsmuffe (1) angeordneten Hinterschnitt eingreift.

2. Schnellkupplung nach Anspruch 1, **dadurch gekennzeichnet, dass** das Sperrmittel wenigstens ein Dehnstoffelement und/oder ein Bimetallteil umfasst, das sich bei Wärmeeinwirkung in Richtung des Hinterschnitts verformt.

3. Schnellkupplung nach Anspruch 2, **dadurch gekennzeichnet, dass** das Dehnstoffelement bzw. das Bimetallteil in einer umlaufenden Nut (15) der Kupplungsmuffe (1) oder der Verschlusshülse (3) angeordnet ist.

4. Schnellkupplung nach Anspruch 2 oder 3, **dadurch gekennzeichnet, dass** das wenigstens eine Bimetallteil als Bimetallstreifen (4) ausgebildet ist.

5. Schnellkupplung nach Anspruch 4, **dadurch gekennzeichnet, dass** mehrere Bimetallstreifen (4) radial um die Kupplungsmuffe (1) angeordnet sind, wobei der Hinterschnitt durch eine radial umlaufende Nut (33) gebildet ist.

6. Schnellkupplung nach Anspruch 5, **dadurch gekennzeichnet, dass** die umlaufende Nut (33) einen sägezahnförmigen Querschnitt aufweist.

7. Schnellkupplung, nach einem der vorgenannten Ansprüche, **dadurch gekennzeichnet, dass** das Sperrelement radial angeordnete Streifen, insbesondere Metallstreifen umfasst, die mit einem Dehnstoffelement verbunden sind, über das diese bei Überschreitung einer Grenztemperatur in den Hinterschnitt hineinbewegbar sind.

## Claims

1. Quick connector for fluid lines comprising a coupling sleeve for receiving a coupling plug and a locking device, which has a locking sleeve axially displaceable on the coupling sleeve as well as at least one locking ball radially movable in a bore of the coupling sleeve, which at least one locking ball is radially movable and lockable via the locking sleeve, **characterised in that** at the coupling sleeve (1) or at the locking sleeve (3) a temperature-controlled locking means is arranged, which engages in an undercut arranged at the locking sleeve (3) or at the coupling sleeve (1) when a limit temperature is exceeded.

2. Quick connector according to claim 1, **characterised in that** the locking means comprises at least one expansion element and/or bimetallic element, which deforms in the direction of the undercut under the effect of heat.

3. Quick connector according to claim 2, **characterised in that** the expansion element or the bimetallic element is arranged in a circumferential groove (15) of the coupling sleeve (1) or of the locking sleeve (3).

4. Quick connector according to claim 2 or 3, **characterised in that** the at least one bimetallic element is designed as a bimetallic strip (4).

5. Quick connector according to claim 4, **characterised in that** several bimetallic strips (4) are radially arranged around the coupling sleeve (1), wherein the undercut is formed by a radially circumferential groove (33).

6. Quick coupling according to claim 5, **characterised in that** the circumferential groove (33) has a serrated cross-section.

7. Quick coupling according to one of the previous claims, **characterised in that** the locking element comprises radially arranged strips, in particular metal strips, which are connected to an expansion element, via which they are movable into the undercut when a limit temperature is exceeded.

## Revendications

1. Raccord rapide pour conduites de fluide, comprenant un manchon de couplage recevant un raccord mâle et un dispositif de verrouillage, lequel dispositif présente une douille d'obturation déplaçable sur le manchon de couplage dans le sens axial ainsi qu'au moins une bille de verrouillage déplaçable dans le sens radial dans un alésage ménagé dans le manchon de couplage, laquelle bille de verrouillage, et au moins celle-ci, est déplaçable et immobilisable dans le sens radial via la douille de verrouillage, **caractérisé en ce que** contre le manchon de couplage (1) ou contre la douille d'obturation (3) est disposé un moyen de blocage piloté en température qui engrène, lors du dépassement d'une température limite, dans une contre-dépouille disposée contre la douille d'obturation (3) ou contre le manchon de couplage (1).

2. Raccord rapide selon la revendication 1, **caractérisé en ce que** le moyen de blocage comprend au moins un élément à matériau dilatable et/ou un bilame qui sous l'action de la chaleur se déforme en direction de la contre-dépouille.

3. Raccord rapide selon la revendication 2, **caractérisé en ce que** l'élément à matériau dilatable et/ou le bilame est disposé dans une gorge (15) périphérique du manchon de couplage (1) ou de la douille (3) d'obturation.

4. Raccord rapide selon la revendication 2 ou 3, **caractérisé en ce qu'**au moins un bilame est configuré en bande bimétallique (4).

5. Raccord rapide selon la revendication 4, **caractérisé en ce que** plusieurs bandes bimétalliques (4) sont disposées dans le sens radial autour du manchon de couplage (1), sachant que la contre-dépouille est formée par une gorge (33) périphérique dans le sens radial.

6. Raccord rapide selon la revendication 5, **caractérisé en ce que** la gorge périphérique (33) présente une section en dents de scie.

7. Raccord rapide selon l'une des revendications précédentes, **caractérisé en ce que** l'élément de blocage comprend des bandes disposées dans le sens radial, en particulier des bandes métalliques qui sont reliées à un élément à matériau dilatable via lequel ces bandes peuvent se déplacer vers l'intérieur de la contre-dépouille en cas de dépassement d'une température limite.
